# EUROPEAN PATENT SPECIFICATION

(11) **EP 0 785 955 B1**
(45) Date of publication and mention of the grant of the patent: **14.07.1999**
(21) Application number: 95935277.4
(22) Date of filing: 12.10.1995
(51) Int. Cl.: C08F 10/00

(54) **POLYMERIZATION CATALYST SYSTEMS, THEIR PRODUCTION AND USE**
VERFAHREN ZUR HERSTELLUNG VON POLYMERISATIONSKATALYSATORSYSTEMEN UND IHRE VERWENDUNG
SYSTEMES DE CATALYSEUR DE POLYMERISATION, LEUR PRODUCTION ET LEUR UTILISATION

(30) Priority: 13.10.1994 US 322675; 13.07.1995 US 501897
(43) Date of publication of application: 30.07.1997
(73) Proprietor: EXXON CHEMICAL PATENTS INC., Baytown, TX 77520-2149 (US)
(72) Inventor: AGAPIOU, Agapios, Kyriacos, Humble, TX 77346 (US); KUO, Chi-I, Humble, TX 77346 (US); MUHLE, Michael, Elroy, Kingwood, TX 77345 (US); SPECA, Anthony, Nicholas, Kingwood, TX 77345 (US)
(74) Representative: Dew, Melvyn John
(86) International application number: US9512737
(87) International publication number: WO9611960

(56) References cited:
- EP-A- 0 435 514
- EP-A- 0 638 595
- WO-A-92/05203
- WO-A-94/26793
- EUROPEAN POLYMER JOURNAL, vol. 30, no. 11, November 1994 OXFORD, pages 1295-1299, XP 000478704
- DIE MAKROMOLEKULARE CHEMIE, vol. 194, no. 12, December 1993 BASEL, pages 3499-3504, XP 000411898 SOGA KAZUO 'Activation of SiO2-supported zirconocene catalysts...'

## Description

### FIELD OF THE INVENTION

This invention relates to a method for the production of metallocene catalyst systems, catalyst systems resulting from such method and the use of such systems in olefin polymerization processes. The invention particularly relates to a method for preparing a supported metallocene catalyst system which is particularly suitable for use in gas phase and slurry polymerization processes and which results in improved reactor operability.

### BACKGROUND OF THE INVENTION

It is widely known that olefin polymerization processes utilizing bulky ligand transition metal catalysts, otherwise known as metallocene catalysts, have produced a diverse array of new polymers which are useful in a wide variety of applications and products.

A well known problem associated with the use of metallocene catalyst systems is their tendency to cause fouling and/or sheeting in gas phase and slurry polymerization processes. Fouling on the walls of the reactor and /or reactor components results in many serious problems including poor heat transfer, particle morphology, and reactor shut-down.

In an effort to solve these problems, many catalyst system modifications and modifications to the polymerization conditions have been reported. For example. U.S. Patent No.s 4,792,592: 4,808,667; 4,855,370; 4,876,320; 4,978,722; 5,026,795; 5,034,481; 5,037,905 are all directed toward the use of antistatic agents or other additives.

EP-435514-A discloses a magnesium chloride support associated with an electron-donor using in supporting a zirconocene and alumoxane. The electron-donor may be an ether. There is no disclosure of an inorganic oxide support.

Die Makromolare Chemie 194 (1993) Dec. No 12 discusses the modification of silica with dichloro-dimethyl silane. This silane is not a surface modifier.

WO9205203-A discloses supported catalyst containing mono cyclopentadienyl transition metal components. Page 9 line 10 to 15 discusses the possible addition of certain Lewis acidic and basic functionalities which are not surface modifiers.

WO9426793-A is a reference under Article 54(3)EPC. Example 8 discloses bis(1,3 BuMeCp)ZrCl2 supported on silica gel together with a non-supported Kamamine AS-990 as antistatic agent.

EP-638595 is a reference under Article 54(3)EPC and discloses supported olefin polymerization catalyst using certain carbonyl containing compounds which are not surface modifiers.

WO-A-9 608 520 which is a reference under Art. 54(3) EPC discloses in example 9 a supported catalyst comprising the combination of bis(1,3-methyl-n-butyl cyclopentadienyl)zirkonium dichloride, methyl a luminoxane and C₁₈H₃₇N(CH₂CH₂OH)₂ on silica.

While these approaches may reduce fouling or sheeting somewhat, they are not generally useful with all catalyst systems, they may be expensive to employ, and they may not reduce both fouling and sheeting to a level sufficient for the successful operation of a continuous process, particularly a commercial or large-scale process. Thus, it would be highly advantageous to have an improved metallocene catalyst system that in a polymerization process would significantly enhance reactor operability by reducing both fouling and sheeting.

### SUMMARY OF THE INVENTION

This invention is generally directed towards a method for the manufacture of supported metallocene catalyst systems, to catalyst systems resulting from such method, and to use of such catalyst systems in polymerization processes.

In one embodiment a method is provided a method for forming a supported metallocene catalyst system, the method comprising combining in a suitable solvent a porous inorganic oxide support material, a metallocene catalyst component, an activator and a surface modifier wherein the surface modifier is represented by the formula: 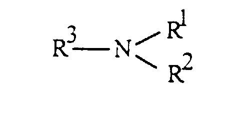 wherein R³ is hydrogen or a branched or linear alkyl group having 1 to 50 carbon atoms. R¹ and R² may be the same or different and may be the same as R³ or contain another heteroatom selected from the group consisting of O, N, P or S, or a sorbitol mono-oleate compound, but excluding the combination of bis(1,3-methyl-n-butyl cyclopentadienyl) zirconium dichloride, methyl alumoxane and C₁₈H₃₇N(CH₂CH₂OH)₂.

In another embodiment, there is provided a method for producing a supported metallocene catalyst system, the method comprising the steps of:
(a) contacting a porous inorganic oxide support material with at least one metallocene catalyst component and at least one activator; and then
(b) adding at least one surface modifier, wherein the surface modifier is present in an amount of 0.05 to 10 weight percent based on the total weight of the catalyst system wherein the surface modifier is represented by the formula: 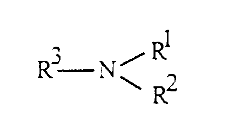 wherein R³ is hydrogen or a branched or linear alkyl group having 1 to 50 carbon atoms and R¹ and R² may be the same or different and may be the same as R³ or contain another heteroatom selected from the group consisting of O, N, P or S, or a sorbitol mono-oleate compound, but excluding the combination of bis(1,3-methyl-n-butyl cyclopentadienyl) zirconium dichloride, methyl alumoxane and the surface modifier C₁₈H₃₇N(CH₂CH₂OH).

Another further embodiment of the invention relates to a process for producing polyolefins by contacting olefin monomer, optionally with at least one comonomer in the presence of the catalyst system resulting from the method described above.

The method for forming the catalyst system of the invention results in a metallocene catalyst system with improved reactor operability. This catalyst system not only reduces fouling and sheeting in a gas phase or slurry polymerization process but the catalyst system itself has better flow properties which facilitate its delivery into the reactor. Also, the catalyst system of this invention results in a high bulk density polymer product having improved physical properties.

In a preferred embodiment, a continuous gas phase process is employed in which a continuous recycle stream is heated by the heat of polymerization, and in another part of the cycle, heat is removed by a cooling system external to the reactor. Fouling in this continuous gas phase process can lead to ineffective operation of various reactor systems, such as the cooling system, temperature probes, and the distributor plate. The tendency to foul is greatly increased in a gas phase operation where a liquid is purposefully introduced into the reactor to increase cooling capacity. This type of gas phase process is known in the industry as a condensed mode polymerization process and is described in U.S. Patent Nos. 4,543,399, 4,588,790 and 5,342,749. The liquid utilized in this process is preferably an inert hydrocarbon in which the metallocene and its activator are quite soluble. The cooling liquid, therefore, can cause the components of a supported catalyst system to dissociate from the support. This disassociation increases the tendency toward fouling. Also, in a slurry or bulk liquid pool polymerization process, solvent and monomer such as isobutane, propylene. butene or hexene can affect the various components of a metallocene system in the same way.

The invention provides for method form preparing a polymerization catalyst which results in a catalyst system exhibiting improved reactor operability, by reducing the fouling and/or sheeting tendencies, in a continuous process.

### DETAILED DESCRIPTION

### Catalyst Components and Catalyst Systems of the Invention

Metallocenes are generally represented by the formula:

[L]ₘM[A]ₙ

where L is a bulky ligand; A is leaving group, M is a transition metal and m and n are such that the total ligand valency corresponds to the transition metal valency. Preferably the catalyst is four coordinate such that the compound is ionizable to a 1⁺ charge state.

The ligands L and A may be bridged to each other, and two L ligands may be present and bridged and/or two A ligands may be present and bridged. The metallocene compound may be full-sandwich compounds having two or more ligands L, which may be cyclopentadienyl ligands or cyclopentadiene-derived ligands, or half-sandwich compounds having one ligand L. which is a cyclopentadienyl ligand or derived ligand.

In one embodiment, at least one ligand L has a multiplicity of bonded atoms, preferably carbon atoms, which typically are arranged in a cyclic structure such as, for example, a cyclopentadienyl ligand. substituted or unsubstituted, or cyclopentadienyl derived ligand or any other ligand capable of η-5 bonding to the transition metal atom. One or more bulky ligands may be π-bonded to the transition metal atom. The transition metal atom may be a Group 4, 5 or 6 transition metal and/or a metal from the lanthanide or actinide series. Other ligands may be bonded to the transition metal. such as a leaving group, such as but not limited to hydrocarbyl, hydrogen or any other univalent anionic ligand. Non-limiting examples of metallocene catalysts and catalyst systems are discussed in for example, U.S. Patent Nos. 4,530,914; 4,871,705; 4,937.299: 4,952,716; 5,124,418; 5,017,714; 5,120,867; 5,278,264; 5,278,119; 5,304,614; 5,324,800; 5,347,025; 5,347,023; 5,391,789; and 5,391,790. The disclosures of EP-A-0 591 756, EP-A-0 520 732, EP-A- 0 420 436, WO 91/04257 WO 92/00333, WO 93/08221, WO 93/08199 and WO 94/01471 are also referred to.

Funher, the metallocene catalyst component of the invention can be a monocyclopentadienyl heteroatom containing compound. This monocyciopentadienyl heteroatom is activated by either an alumoxane, an ionizing activator, a Lewis acid or a combination thereof to form an active polymerization catalvst system. These types of catalyst systems are descnbed in, for example, PCT International Publication WO 92/00333, WO 94/07928, and WO 91/ 04257, WO 94/03506, U.S. Patent Nos. 5,057,475, 5,096,867, 5,055,438, 5,198,401, 5,227,440 and 5,264,405 and EP-A-0 420 436. In addition, the metallocene catalyst systems useful in this invention can include non-cyclopentadienyl catalyst components. or ancillary ligands such as boroies or carbollides in combination with a transition metal. Additionally included are the metailocene catalysts and catalyst systems described in U.S. Patent Nos. 5,064,802, 5,149,819, 5,243,001, 5,239,022, 5,276,208, 5,296,434, 5,321,106, 5,329.031 and 5,304,614, PCT publications WO 93/08221 and WO 93/08199 and EP-A- 0 578 838.

The preferred transition metal component of the catalyst system of the invention are those of Group 4, particularly, zirconium, titanium and hafnium. The transition metal may be in any oxidation state, preferably -3 or +4 or a mixture thereof.

"Metallocene" as used herein means a catalyst component containing one or more cyclopentadienyl moieties in combination with a transition metal. In one embodiment the metallocene catalyst component is represented by the general formula (Cₚ)ₘMRₙR'ₚ wnerein at least one Cₚ is an unsubstituted or, preferably, at least one Cp is a substituted cyclopentadienyl ring, symmetrical or unsymetrically substituted: M is a Group 4, 5 or 6 transition metal; R and R' are independently selected from halogen, hydrocarbyl group, and hydrocarboxyl groups having 1-20 carbon atoms or combinations thereof; m=1-3, n=0-3, p=0-3, and the sum of m+n+p equals the oxidation state of M, preferably m = 2, n = 1 and p = 1.

In another embodiment the metallocene catalyst component is represented by one of the formulas:

(C₅R'ₘ)ₚR"ₛ(C₅R'ₘ)MQ₃₋ₚ₋ₓ

and

R"ₛ(C₅R'ₘ)₂MQ'

wherein Me is a Group 4, 5, 6 transition metal, at least one C₅R'ₘ is a substituted cyclopentadienyl, each R', which can be the same or different, is hydrogen, alkyl, alkenyl, aryl, alkylaryl or arylalkyl radical having from 1 to 20 carbon atoms or two carbon atoms joined together to form a part of a substituted or unsubstituted ring or rings having 4 to 20 carbon atoms, R" is one or more of or a combination of a carbon, a germanium, a silicon, a phosphorous or a nitrogen atom containing radical bridging two (C₅R'ₘ) rings, or bridging one (C₅R'ₘ) ring to M, when p = 0 and x = 1 otherwise "x" is always equal to 0, each Q which can be the same or different is an aryl, alkyl, alkenyl, alkylaryl, or arylalkyl radical having from 1 to 20 carbon atoms, halogen, or alkoxides, Q' is an alkylidene radical having from 1-20 carbon atoms, s is 0 or 1 and when s is 0, m is 5 and p is 0, 1 or 2 and when s is 1, m is 4 and p is 1.

In another embodiment, the metallocene catalyst component is as described in commonly owned copending U.S. application Ser. No. 581,841, now U.S. Pat. No. 5,096,867 which disclosed the discovery of a class of monocyclopentadienyl Group IV B transition metal compounds which, when activated with an alumoxane, may be employed as a catalyst system in solution, slurry or bulk phase polymerization procedure to produce a polyolefin of high weight average molecular weight and relatively narrow molecular weight distribution.

The "Group IV B transition metal component" of the catalyst system disclosed in application Ser. No. 581,841, now U.S. Pat. No. 5,096,867 is represented by the formula: 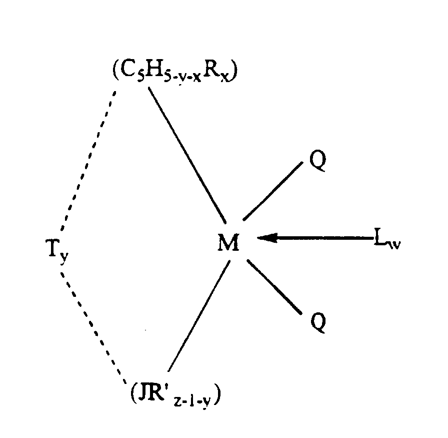 wherein M is Zr, Hf or Ti in its highest formal oxidation state (+4, d⁰ complex);
(C₅H_{5-y-x}Rₓ) is a cyclopentadienyl ring which is substituted with from zero to five substituent groups R, "x" is 0, 1, 2, 3, 4 or 5 denoting the degree of substitution, and each substituent group R is, independently, a radical selected from a group consisting of C₁-C₂₀ hydrocarbyl radicals, substituted C₁-C₂₀ hydrocarbyl radicals wherein one or more hydrogen atoms is replaced by a halogen radical, an amido radical, a phosphido radical, and alkoxy radical or any other radical containing a Lewis acidic or basic functionality, C₁-C₂₀ hydrocarbyl-substituted metalloid radicals wherein the metalloid is selected from the Group IV A of the Periodic Table of Elements; halogen radicals, amido radicals, phosphido radicals, alkoxy radicals, alkylborido radicals or any other radical containing Lewis acidic or basic functionality; or (C₅H_{5-y-x}Rₓ) is a cyclopentadienyl ring in which at least two adjacent R-groups are joined forming a C₄-C₂₀ ring to give a saturated or unsaturated polycyclic cyclopentadienyl ligand such as indenyl, tetrahydroindenyl, fluorenyl or octahydrofluorenyl;
(JR'z-1-y) is a heteroatom ligand in which J is an element with a coordination number of three from Group V A or an element with a coordination number of two from Group VI A of the Periodic Table of Elements, preferably nitrogen, phosphorus, oxygen or sulfur, and each R' is. independently a radical selected from a group consisting of C₁-C₂₀ hydrocarbyl radicals, substituted C₁-C₂₀ hydrocarbyl radicals wherein one or more hydrogen atoms are replaced by a halogen radical, an amido radical. a phosphido radical. an alkoxy radical or any other radical containing a Lewis acidic or basic functionality, and "z" is the coordination number of the element J;
each Q may be independently any univalent anionic ligand such as a halide, hydride, or substituted or unsubstituted C₁-C₂₀ hydrocarbyl, alkoxide, aryloxide, amide, arylamide, phosphide or arylphosphide, provided that where any Q is a hydrocarbyl such Q is different from (C₅H_{5-y-x}Rₓ), or both Q together may be an alkylidene or a cyclometallated hydrocarbyl or any other divalent anionic chelating ligand;
"y" is 0 or 1 when w is greater than 0; y is 1 when w is 0; when "y" is 1, T is a covalent bridging group containing a Group IV A or V A element such as, but not limited to, a dialkyl, alkylaryl or diaryl silicon or germanium radical, alkyl or aryl phosphine or amine radical, or a hydrocarbyl radical such as methylene, ethylene and the like;
L is a neutral Lewis base such as diethylether, tetraethylammonium chloride, tetrahydrofuran, dimethylaniline, aniline, trimethylphosphine, n-butylamine, and the like; and "w" is a number from 0 to 3. L can also be a second transition metal compound of the same type such that the two metal centers M and M' are bridged by Q and Q', wherein M' has the same meaning as M and Q' has the same meaning as Q. Such dimeric compounds are represented by the formula:

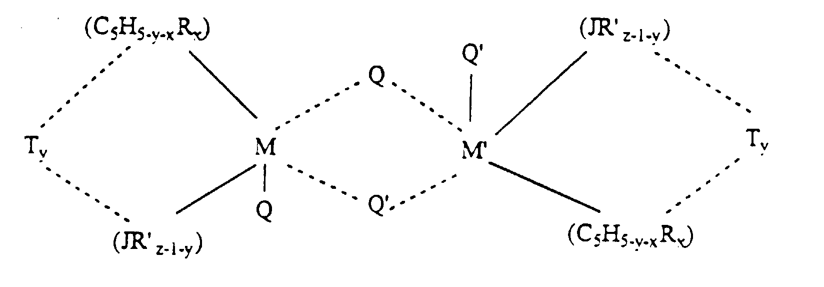

For the purposes of this patent specification, the terms "cocatalysts" and "activators" are used interchangeably and are defined to be any compound or component which can activate a bulky ligand transition metal compound or a metallocene. as defined above, to polymerize one or more monomers under polymerization conditions. It is within the scope of this invention to use alumoxane as an activator, and/or to also use ionizing activators, neutral or ionic, or compounds such as tri (n-butyl) ammonium tetra bis(pentaflurophenyl) boron or trisperfluoro phenyl boron metalloid precursor, which ionize the neutral metallocene compound.

Generally, the alkylalumoxanes preferred for use in olefin polymerization contain about 4 to 20 of the repeating units: 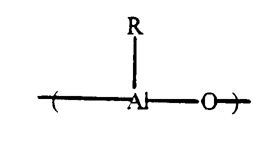 where R is a C₁-C₈ alkyl including mixed alkyls. Particularly preferred are the compounds where R is methyl. There are a variety of methods for preparing alumoxane, non-limiting examples of which are described in U.S. Patent No. 4,665,208, 4,952,540, 5,091,352, 5,206,199, 5,204,419. 4,874,734, 4,924,018, 4,908,463, 4,968,827, 5,308,815, 5,329,032, 5,248,801, 5,235,081, 5,157,137, 5,103,031 and EP-A-0 561 476, EP-B1-0 279 586, EP-A-0 594-218 and WO 94/10180, each of which is fully incorporated herein by reference.

Some methylalumoxane (MAO) solutions tend to become cloudy and gelatinous over time. It may be advantageous to clarify such solutions prior to use. A number of methods may be used to create gel-free MAO solutions or to remove gels from the solutions. Gelled solutions are often simply shaken or decanted. U.S. Patent No. 5,157,137 discloses a process for forming clear, gel-free solutions of alkylalumoxane by treating a solution of alkylalumoxane with an anhydrous salt and/or hydride of an alkali or alkaline earth metal.

It is also within the scope of this invention to use ionizing activators, neutral or ionic, or compounds such as tri (n-butyl) ammonium tetrakis(pentaflurophenyl) boron, which ionize the neutral metallocene compound. Such ionizing compounds may contain an active proton, or some other cation associated with but not coordinated or only loosely coordinated to the remaining ion of the ionizing compound. Combinations of activators are also contemplated by the invention, for example, alumoxane and ionizing activators in combinations, see for example, WO 94/07928.

Descriptions of ionic catalysts for coordination polymerization comprised of metallocene cations activated by non-coordinating anions appear in the early work in EP-A-0 277 003, EP-A-0 277 004 and US patent 5,198,401 and WO-A-92/00333. These teach a preferred method of preparation wherein metallocenes (bisCp and monoCp) are protonated by an anion precursor such that an alkyl/hydride group is abstracted from a transition metal to make it both cationic and charge-balanced by the non-coordinating anion.

The term "noncoordinating anion" means an anion which either does not coordinate to said cation or which is only weakly coordinated to said cation thereby remaining sufficiently labile to be displaced by a neutral Lewis base. "Compatible" noncoordinating anions are those which are not degraded to neutrality when the initially formed complex decomposes. Further, the anion will not transfer an anionic substituent or fragment to the cation so as to cause it to form a neutral four coordinate metailocene compound and a neutral by-product from the anion. Noncoordinating anions useful in accordance with this invention are those which are compatible, stabilize the metallocene cation in the sense of balancing its ionic charge in a +1 state, yet retain sufficient lability to permit displacement by an ethylenically or acetylenically unsaturated monomer during polymerization.

The use of ionizing ionic compounds not containing an active proton but capable of producing both the active metallocene cation and an noncoordinating anion is also known. See, EP-A-0 426 637 and EP-A- 0 573 403. An additional method of making the ionic catalyst systems uses ionizing anion pre-cursors which are initially neutral Lewis acids but form the cation and anion upon ionizing reaction with the metallocene compounds, for example the use of tris(pentafluorophenyl) boron. See EP-A-0 520 732. Ionic catalysts for addition polymerization can also be prepared by oxidation of the metal centers of transition metal compounds by anion pre-cursors containing metallic oxidizing groups along with the anion groups, see EP-A-0 495 375.

Where the metal ligands include halogen moieties (for example, bis-cyclopentadienyl zirconium dichloride) which are not capable of ionizing abstraction under standard conditions, they can be converted via known alkylation reactions with organometallic compounds such as lithium or aluminum hydrides or alkyls, alkylalumoxanes. Grignard reagents, etc. See EP-A-0 500 944 and EP-A1-0 570 982 for *in situ* processes describing the reaction of alkyl aluminum compounds with dihalo-substituted metallocene compounds prior to or with the addition of activating anionic compounds.

Methods of supporting ionic catalysts comprising metallocene cations and noncoordinating anions are described in WO91/09882 and WO 94/03506. The methods generally comprise either physical adsorption on traditional polymeric or inorganic supports that have been largely dehydrated and dehydroxylated, or using neutral anion precursors that are sufficiently strong Lewis acids to activate retained hydroxy groups in silica containing inorganic oxide supports such that the Lewis acid becomes covalently bound and the hydrogen of the hydroxy group is available to protonate the metallocene compounds.

In another embodiment of the invention two or more metallocene catalyst components can be combined. For example, mixed catalysts are described in U.S. Patent No. 5,281,679 and WO-A-9510542. Also, at least one metallocene catalyst can be combined with a non-metallocene or traditional Ziegler-Natta catalyst or catalyst system non-limiting examples are described in U.S. Patent Nos. 4,701,432, 5,124,418, 5,077,255 and 5,183,867.

The "support" is a porous inorganic oxide support.

The inorganic oxide materials include those of Groups 2, 3, 4, 5, 13 or 14 metal oxides. More preferable support materials include silica alumina, silica-alumina, and mixtures thereof. Other inorganic oxides that may be employed either alone or in combination with the silica, alumina or silica-alumina are magnesia titania or zirconia.

Preferably, the support material has a surface area in the range of from 10 to 700 m²/g, a pore volume in the range of from about 0.1 to about 4.0 cmc/g and an average particle size in the range of from 10 to 500 µm. More preferably, the surface area of the support material is in the range of from 50 to 500 m²/g, pore volume of from 0.5 to 3.5 ml/g and the average particle size of from 20 to 200 µm. Most preferably the surface area range is from 100 to 400 m²/g, pore volume from 0.8 to 3.0 cc/g and average particle size is from 10 to 100 µm. The pore size of the support material is typically in the range of from 10 to 1000Å, preferably 50 to 500Å, and most preferably 75 to 350Å.

The surface modifier of this invention can be expressed by the formula: 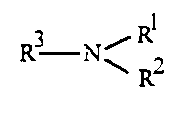 where R³ is hydrogen or a branched or linear alkyl group having 1 to 50 carbon atoms. R¹ and R² may be the same or different and may be the same as R³ or contain another heteroatom such as O, N, P or S.

The surface modifiers include the following general structures wherein R represents a branched or linear alkyl groups: RNH₂, R₂NH, (R'C(OHIₙR")NH₂, (R'C(OH)ₙR")₂NH, RCONH₂, RCONHR RN(ROH)₂, RC(O)NROH, R₃N. These compounds include amines.

The preferred surface modifier is represented by the following formula for an alkoxylated tertiary amine: 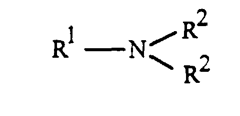 where R¹ may be hydrogen or a (linear or branched) alkyl group of from 1 to 50 carbon atoms; R² may be a hydroxy group such a (CH₂)ₓOH radical where x is an integer from 1 to 50, preferably 2 to 25. Non-limiting examples include Kemamine AS-990 (available from Witco Chemical Corporation, Houston. Texas) having the formula C₁₈H₃₇N(CH₂CH₂OH)₂ and Kemamine AS-650 (also available from Witco) having the formula C₁₂H₂₅N(CH₂CH₂OH)₂. Other surface modifiers can include bishydroxyethylcocoamine. 2,2-(octadecylamino)bis ethanol, polyoxyethylene alkylamine, and SPAN-80 (available from ICI Specialties, Wilmington, Delaware) having the formula:

(CH₃)(CH₂)₇CHCH(CH₂)₇OCOCH₂(CHOH)₄CH₂OH (sorbitan mono-oleate).

Tertiary amines and ethoxylated amines are preferred surface modifiers.

### Methods of Producing the Catalyst System of the Invention

At least one component of the catalyst system in addition to the surface modifier is supported on a porous support material. Any support technique may be used. Examples of catalyst component and/or system supporting techniques which may be used in the invention are described in U.S. Patent Nos. 4,937,217; 4,912,075; 4,935,397; 4,937.301; 4,914,253; 5,008,228; 5,086,025; 5,147,949; 4,808,561; 4,897,455; 4,701,432; 5,238,892; 5,240,894; 5,332,706; and WO-A-9510542, WO-A-9507939, WO-A-9601856, and WO-A-9605115. This invention in one embodiment relates to the addition of a surface modifier at any point during the preparation of any of the catalyst systems described in these patents and patent applications. Preferably, however, the surface modifier is added as the last component. Thus, at least one metallocene catalyst component, at least one activator, at least one carrier and at least one surface modifier are combined in any order to form the supported catalyst system of the invention.

The catalyst system components may be supported seperately or together. Preferably, the metallocene catalyst component and its activator are combined first to form a solution of their reaction product. This reaction product solution is preferably then combined with the support material followed by the addition of the surface modifier. After the reaction product solution is combined with the support material then the mixture is preferably dried and/or washed and dried. In another embodiment the surface modifier is added to the solution directly as a solid or slurried in a liquid, preferably one in which the catalyst components and the activator are insoluble. In another embodiment, the surface modifier is supported prior to contact with the activator and/or metallocene components. In another embodiment the surface modifier is dry blended with the metallocene catalyst component, the activator and the carrier. In another embodiment the metallocene catalyst component, the activator, and the surface modifier are first combined in a liquid in which all the components are soluble except the camer and then the mixture is combined with the support material.

In one embodiment only solutions having a specified volume are brought into contact with the support material (whether containing one or more of the catalyst system component(s)). Preferably, the total volume combined with the support material is less than 4 times the total pore volume of the support material, preferably less than 3 times the total pore volume ofthe porous support, and most preferably, the total volume combined with the support material is in the range of from more than 1 times the total pore volume of the support material to 2 times the total pore volume of the support material. Preferably, the solution is applied either dropwise or as a spray while the support is agitated or otherwise thoroughly mixed.

Generally, a slurry is formed when two phases are observable, one of which contains all or most of the support material. The volume of solution required to reach this stage will vary depending upon, among other things, the type of support material and type of catalyst system components. Just prior to the point at which a slurry is formed, is a stage which is defined herein as the "mud" stage. At the mud stage, the solution volume is such that, while two phases are not visible, the support material is saturated and the support particles are firmly packed together. Prior to the mud stage, the volume of solution is such that the support material appearance ranges from dry and free flowing (even though the support may contain close to one pore volume of solution) to dry but slightly sticky to variously damp and clumpy such as is the appearance of variously wet sand.

In any of the methods for producing the catalyst system of the invention described above, the weight percent of the surface modifier based on the total weight of the catalyst system should typically be in the range of 0.05 to 10 weight percent, more preferably 0.10 to 5 weight percent and most preferably 0.25 to 3.5 weight percent.

The procedure for measuring the total pore volume of a porous support is well known in the art. Details of one of these procedures are discussed in Volume 1, *Experimental Methods in Catalytic Research* (Academic Press, 1968) (specifically see pages 67-96). This preferred procedure involves the use of a classical BET apparatus for nitrogen absorption. Another method well know in the art is described in Innes, *Total porosity and Particle Density of Fluid Catalysts By Liquid Titratton,* Vol. 28, No. 3, Analytical Chemistry 332-334 (March, 1956).

In another embodiment, the supported catalyst is produced by contacting an organometallic compound, such as trimethyl aluminum with silica containing water, absorbed or adsorbed, within the carrier to form an activator, alumoxane for example. In this particular embodiment, the metallocene catalyst component is then added to the carrier and formed activator with or separately from a surface modifier, preferably after the metallocene has been added.

In another embodiment the mole ratio of the surface modifier to the metal of the metallocene catalyst component is in the range of from 0.05:1 to 10:1, preferably 0.2:1 to 5:1 and more preferably from 0.2:1 to 3:1.

The mole ratio of the metal of the activator component to the transition metal of the metallocene component is in the range of ratios between 0.3:1 to 1000:1, preferably 20:1 to 800:1, and most preferably 50:1 to 500:1. Where the activator is an ionizing activator as previously described the mole ratio of the metal of the activator component to the transition metal component is preferably in the range of ratios between 0.3:1 to 3:1.

Finally, the catalyst system of this invention may be prepolymerized in any prepolymerization process using any monomer/comonomer prior to use in the primary polymerization which is described in detail below.

### Polymerization Process of the Invention

The catalyst systems of this invention are suited for polymerization of monomers and optionally comonomers in a gas phase, slurry, liquid pool or bulk polymerization process.

In the preferred embodiment, this invention is directed toward gas phase polymerization or copolymerization reactions involving polymerization of one or more of alpha-olefin monomers having from 2 to 20 carbon atoms, preferably 2-12 carbon atoms. The invention is particularly well suited to copolymerization reactions involving the polymerization of one or more alpha-olefin monomers such as ethylene, propylene, butene-1, pentene-1, 4-methylpentene-1, hexene-1, octene-1, decene-1, and cyclic olefins such as cyclopentene, and styrene or a combination thereof. Other monomers include polar vinyls, cyclobutene, norbornene, diolefins such as dienes, polyenes, norbornene, norbornadiene, acetylene and aldehyde monomers. Preferably a copolymer of ethylene or propylene is produced. Preferably the comonomer is an alpha-olefin having from 3 to 15 carbon atoms, preferably 4 to 12 carbon atoms and most preferably 4 to 10 carbon atoms. In another embodiment ethylene or propylene is polymerized with at least two different comonomers to form a terpolymer and the like, the preferred comonomers are a combination of alpha-olefin monomers having 3 to 15 carbon atoms, more preferably 4 to 10 carbon atoms.

Typically in a gas phase polymerization process, a continuous cycle is employed where in one part of the cycle of a reactor, a cycling gas stream, otherwise known as a recycle stream or fluidizing medium, is heated in the reactor by the heat of polymerization. This heat is removed in another part of the cycle by a cooling system external to the reactor. (See for example U.S. Patent Nos. 4,543,399, 4,588,790, 5,028,670 and 5,352,749 and WO-A-9608520.

Generally in a gas fluidized bed process for producing polymer from monomers, a gaseous stream containing one or more monomers is continuously cycled through a fluidized bed in the presence of a catalyst under reactive conditions. The gaseous stream is withdrawn from the fluidized bed and recycled back into the reactor. Simultaneously, polymer product is withdrawn from the reactor and new or fresh monomer is added to replace the polymerized monomer.

In another embodiment a surface modifier as descnbed in this patent specification is introduced into the reactor together. separateiv or apart from the other catalyst components of the invention. These surface modifiers include alcohols, thiol, silanol, diol, ester, ketone, aldehyde, amine and ether compounds. Also, the catalyst system of the invention may be introduced into the reactor with a gas such as a nitrogen and/or a carbon monoxide mixture. Carbon monoxide is may be used as a retardant for the catalyst without substantially deactivating the catalyst, but rather suppressing the catalyst activity for a short period of time. This suppression in activity allows the catalyst to penetrate further into the reaction zone before polymerization initiation.

A slurry polymenzation process involves pressures in the range of about 1 to about 500 atmospheres and even greater and temperatures in the range of -60°C to about 280°C. In a slurry polymerization, a suspension of solid, particulate polymer is formed in a liquid polymerization medium to which ethylene and comonomers and often hydrogen along with catalyst are added. The liquid employed in the polymerization medium can be alkane or cycloalkane, or an aromatic hydrocarbon such as toluene, isobutylene, ethylbenzene or xylene. The medium employed should be liquid under the conditions of polymerization and relatively inert. Preferably, hexane or isobutane is employed.

In a preferred embodiment of the process of the invention the process is essentially free of a scavenger as is described in WO-A-9608520 and WO-A-9608521. For the purposes of this patent specification and appended claims a "scavenger" is any organometallic compound which is reactive towards oxygen and/or water and/or polar compounds and which does not include the catalyst components of the invention. Non-limiting examples of scavengers can be generally represented by the formula RₙA, where A is a Group 12 or 13 element, each R, which can be the same or different, is a substituted or unsubstituted. straight or branched alkyl radical, cyclic hydrocarbyl, alkyl-cyclo hydrocarbyl radicals or an alkoxide radical, where n is 2 or 3. Typical scavengers include trialkylaluminum compounds such as trimethylaluminum, triethylaluminum, triisopropyl aluminum, tri-sec-butyl aluminum, tri-t-butyl aluminum triisobutyl aluminum, trialkyl boranes and alkoxides and the like.

The phrase "essentially free of scavenger" as used herein means that during the process of the invention no more than 10 ppm of a scavenger based on the total weight of the recycle stream is present at any given point in time during the process of the invention.

Optionally, for the purpose of ensuring polymerization initiation during reactor start-up, a scavenger may be present in an amount less than 300 ppm, preferably less than 250 ppm, more preferably less than 200 ppm, even more preferably less than 150ppm, still more preferably less than 100 ppm, and most preferably less than 50 ppm based on the total bed weight of a fluidized bed during the first 12 hours from the time the catalyst is placed into the reactor, preferably up to 6 hours, more preferably less than 3 hours, even more preferablv less than 2 hours, and most preferably less than 1 hour and then the introduction of the scavenger is halted. It is also contemplated that the catalyst system of this invention can be used exclusively upon start-up of a polymerization process which often requires the use of a scavenging component or, alternatively, the catalyst system of the invention may be used throughout the entire polymerization process.

In the most preferred embodiment of the invention the process is a gas phase polymerization process operating in a condensed mode. For the purposes of this patent specification and appended claims the process of purposefully introducing a liquid and a gas phase into a reactor such that the weight percent of liquid based on the total weight of the recycle stream is greater than 2.0 weight percent is defined to be operating a gas phase polymerization process in a "condensed mode".

In one embodiment of the process of the invention the weight percent of liquid in the recycle stream based on the total weight of the recycle stream is in the range of 2 to 50 weight percent, preferably greater than 10 weight percent and more preferably greater than 15 weight percent and even more preferably greater than 20 weight percent and most preferably in the range between 20 and 40 percent. However, any level of condensed can be used depending on the desired production rate.

### EXAMPLES

In order to provide a better understanding of the present invention including representative advantages and limitation thereof, the following examples are offered.

The properties of the polymer were determined by the following test methods:
Melt Index is measured in accordance with ASTM D-128-Condition E.
Density is measured in accordance with ASTM-D-1238.

Bulk Density is measured as follows: the resin is poured via a 2.2 cm (7/8") diameter funnel into a fixed volume cylinder of 400 ml; the bulk density is measured as the weight of resin in the cylinder divided by the 400 ml to give a value in g/ml.

Particle size is determined as follows: the particle size is measured by determining the weight of the material collected on a series of U.S. Standard sieves and determining the weight average particle size.

Fines are defined as the weight percentage of the total distribution passing through 120 mesh unit standard sieve.

### EXAMPLE 1

### Preparation of Catalyst A

Davison grade 948 silica (available from W.R. Grace. Davison Chemical Division, Baltimore, Maryland) was dehydrated to 200°C and used as the support. The dehydrated silica (800g) was added into a 2 gal. reactor followed by toluene (2000 cc) and then 1060 cc of 30 wt% methylalumoxane (MAO) (available from Albemarle Corporation, Baton Rouge, Louisiana) with slow agitation. The mixture was allowed to stir at 150°F (66°C) for 4 hours. Following the MAO reaction time, 23 grams of bis-(1-methyl-3-n-butyl cyclopentadienyl) zirconium dichloride was added as a 10 wt% solution in toluene. Reaction time for the metallocene was 1 hour after which the catalyst was dried with N₂ under a vacuum. Drying time was 3 hours at 150°F (66°C)and at a reduced agitator speed of 30 rpm. A total of 1200 gms ofthe dried free flowing catalyst system was isolated.

### EXAMPLE 2

### Preparation of Catalyst B

Into a 10 gal, reactor was added 23 liters of a 15 wt% trimethylaluminium (TMA) solution in heptane. While agitating the solution, 4.2 kg of silica (Davison 948 grade) was added slowly. The silica had a measured loss-on-ignition (LOI) of 12.5 wt% (LOI can be measured by determining the weight loss of the support material which has been held at temperature of 1000°C for 16 hours) and was added via a dip tube slowly to prevent the reaction temperature from going above 50°F (10°C). After all of the silica was added. 94.5 g of bis(1-methyl -3-n-butylcyclopentadienylzirconium dichloride was added as a 10% solution in heptane. The mixture was then allowed to react while stirring for 1 hour at 150°F (66°C) after which the agitation was stopped; the slurry was allowed to settle and the liquid layer was removed by decanting. Four hexane washes were then carried out by introducing 20 liters of hexane each time, stirring, allowing the solids to settle and decanting. Drying of the catalyst system was then initiated with N₂ flow at 150°F (66°C) with slow intermittent agitation until the catalyst system was free flowing.

### EXAMPLE 3

### Preparation of Catalyst C (not illustrating the claimed invention)

Into a 2 gallon reactor was charged first 1.1 liters of toluene then 0.93 liters of 30 wt% MAO solution in toluene(available from Albemarle), followed by 20.1 g of bis(1-methyl-3-n-butyl cyclopentadienyl) zirconium dichloride as a 10% solution in toluene. The mixture was stirred for 30 minutes at room temperature after which 350 g of silica (Davison 948 dehydrated at 600°C) was added to the liquid with slow agitation. Stirring speed was increased for approximately 10 minutes to insure dispersion of the silica into the liquid and then 2 portions of 175 g of additional silica were added at slow agitation followed by increased stirring. After all of the silica (700 g) was introduced to the reactor 0.6 liters of toluene was added to make up a slurry of liquid to solid having a consistency of 4 cc/g of silica. Mixing was continued for 15 minutes at 120 rpm after which 5 g of surface modifier. Kemamine AS-990 available from Witco was dissolved in 100 ml of toluene and was added and stirred for 15 minutes. Drying was then initiated by vacuum and some N₂ purge at 175°F (79.4°C). When the catalyst system appeared to be free flowing it was cooled down and discharged into a nitrogen purged vessel. An approximate yield of 1.0 kg of dry catalyst system was obtained.

### Polymerization

Into a 2 liter autoclave reactor under a nitrogen purge was charged with triethylaluminum (TEAL), followed by 60 cc of hexene-1 comonomer and 800 ml of isobutane diluent. The content of the reactor was heated to 80°C after which 100 mg of catalyst was introduced concurrently with ethylene to make up a total reactor pressure of 325 psig (2240 kPa). The reactor temperature was maintained at 85°C and the polymerization was allowed to proceed for 40 min. After 40 minutes the reactor was cooled, ethylene was vented off and the polymer dried and weighed to obtain the polymer yield. Table 1 provides the yield and activity data using metallocene catalyst with different levels of AS-990.

Examples 4-6 show the effect of surface modifier, Kemamine AS-990 (available from Witco) on the activity of Catalyst A. All polymerizations were carried out in an iso-butane slurry reactor as described above.

**TABLE 1**

| **Example** | **AS-990 Amount**^{**(1)**} | **Activity (g/PE/gCat·h)** | **Fouling** |
|---|---|---|---|
| | | | |
| 4 * | None | 1725 | Medium |
| 5 * | 3 wt% | 1830 | None |
| 6 * | 5 wt% | 1560 | None |

| | | | |
|---|---|---|---|
| * examples not illustrating the claimed invention | | | |
| ⁽¹⁾Amount based on the weight of catalyst. | | | |

The above examples in Table 1 illustrate the use of Kemamine AS-990 (available from Witco) to the catalyst prior to polymerization does not have a negative effect on activity, and reactor fouling is virtually eliminated.

Examples 7-9 of Table 2 show the improved fouling effect of precontacting Catalyst A with a surface modifier, Atmer 163 (a tertiary fatty amine available from ICI Specialties, Wilmington, Delaware) which has the similar chemical structure as Kemamine AS-650 (available from Witco). In these examples the catalyst system was slurried in hexane, the appropriate amount of Atmer 163 was added to the slurry and the mixture stirred at room temperature for 30 minutes. The catalyst systems were then dried. The resulting modified catalyst system was used in a polymerization process as described above in Example 3.

**TABLE 2**

| Example | Atmer 163 Amount⁽¹⁾(wt%) | Activity (g/PE/gCat·h) | MI (dg/min) | MIR | Density (g/cc) | Fouling |
|---|---|---|---|---|---|---|
| | | | | | | |
| 7 | 0 | 1620 | 0.23 | 17.5 | 0.9168 | Medium |
| 8 | 2 | 1470 | 0.26 | 16.6 | 0.9159 | None |
| 9 | 3 | 1560 | 0.24 | 17.6 | 0.9156 | None |

| | | | | | | |
|---|---|---|---|---|---|---|
| ⁽¹⁾Amount based on the weight of catalyst system. | | | | | | |

The above examples 7-9 of Table 2 illustrate that precontacting Catalyst A with Atmer 163 does not have a negative effect on the catalyst's performance, and that reactor fouling is eliminated.

Examples 10-15 show the effect of Kemamine AS-990 and AS-650 surface modifiers on the performance of Catalyst B.

**TABLE 3**

| **Example** | **Surface Modifier** | **Amount (wt%)** | **Activity (g/PE/gCat·h)** | **Fouling** |
|---|---|---|---|---|
| 10 | None | 0 | 1200 | High |
| 11 | AS990 | 3 | 1440 | None |
| 12 | AS990 | 3 | 1545 | None |
| 13 | None | 0 | 1170 | High |
| 14 | AS650 | 2.5 | 1470 | None |
| 15 | AS650 | 2.5 | 1410 | None |

The above examples 10-15 of Table 3 illustrate that surface modifiers such as Kemamine AS-650 and AS-990 have a beneficial effect on reactor operability.

Examples 18-20 illustrate the effect of the surface modifier, Kemamine AS-990 (available from Witco) on Catalyst C performance in the presence of different alkyl scavengers.

**TABLE 4**

| **Example** | **Scavenger** | **Surf. Mod. Amount (wt%)** | **Activity (g/PE/gCat·h)** | **Fouling** |
|---|---|---|---|---|
| 16 * | TEAL | 0 | 1950 | Low |
| 17 * | TEAL | 2 | 1695 | None |
| 18 * | TIBAL | 0 | 2640 | Medium |
| 19 * | TIBAL | 2 | 2430 | None |
| 20 * | TIBAL | 4 | 2295 | None |

| | | | | |
|---|---|---|---|---|
| * examples not illustrating the claimed invention | | | | |

The above examples 16-20 of Table 4 show the benefit of the surface modifier in the presence of a scavenger.

### EXAMPLE 21

### Preparation Of Catalyst D (not illustrating the claimed invention)

The metallocene catalyst was prepared from 800 lbs (364 kg) of silica (Davison 948) dehydrated at 600 °C. The catalyst was a commercial scale catalyst prepared in a mixing vessel with an agitator. An initial charge of 1156 pounds(525 kg) toluene was added to the mixer. This was followed by mixing 925 pounds (420 kg) of 30 percent by weight methyl alumoxane in toluene. This was followed with 100 pounds (46 kg) of 20 percent by weight bis(1-methyl-3-n-butyl cyclopentadienylzirconium dichloride in toluene (20.4 pounds (9.3 kg) of contained metallocene). An additional 144 pounds (66 kg) of toluene was added to the mixer to rinse the metallocene feed cylinder and allowed to mix for 30 minutes at ambient conditions. The above mixture was added to the silica after which 54.3 pounds (25 kg) of a Kemamine AS-990 in toluene, surface modifier solution, containing 5.3 pounds (2.4 kg) of contained Kemamine AS-990. An additional 100 pounds (46Kg) of toluene rinsed the surface modifier container and was added to the mixer. The resulting slurry was vacuum dried at 3.2 psia (70.6 kPa) at 175°F (79° C) to a free flowing powder. The final catalyst weight was 1093 pounds (497 kg). The catalyst had a final zirconium loading of 0.40% and an aluminum loading of 12.0%.

### Polymerization

The polymerization was conducted in a commercial scale continuous gas phase fluidized bed reactor. The fluidized bed is made up of polymer granules. The gaseous feed streams of ethylene and hydrogen are introduced below the reactor bed into the recycle gas line. Hexene comonomer is introduced below the reactor bed in a separate line to the recycle gas line. An inert hydrocarbon such as isopentane is also introduced to the reactor in the recycle gas line. The isopentane is added to provide additional heat capacity to the reactor recycle gases. The individual flow rates of ethylene, hydrogen and comonomer were controlled to maintain fixed composition targets. The ethylene concentration was controlled to maintain a constant hydrogen to ethylene ratio. The concentration of the gases was measured by an on-line gas chromatograph to ensure relatively constant composition in the recycle gas stream. Triethyl aluminum (TEAL) as 2 percent by weight solution in isopentane carrier solvent was introduced into the fluidized bed for about 2 hours and 40 minutes at a rate of 32 lb/hr (15 kg/hr) prior to the introduction of the catalyst. Once the catalyst feed began TEAL introduction continued for about 1 hour and then was stopped. The total TEAL concentration based on bed weight was 122 ppm.

The solid catalyst was injected directly into the fluidized bed using purified nitrogen. The catalyst rate was adjusted to maintain a constant production rate. The reacting bed of growing polymer particles is maintained in a fluidized state by a continuous flow of the make up feed and recycle gas through the reaction zone. The reactor was operated at a total pressure of 310 psig (2138kPa). To maintain a constant reactor temperature, the temperature of the recycle gas is continuously adjusted up or down to accommodate any changes in the rate of heat generation due to the polymerization.

The fluidized bed was maintained at a constant height by withdrawing a portion of the bed at a rate equal to the formation of the particulate product. The product is removed semi-continuously via a series of valves into a fixed volume vessels. These fixed volume vessels are vented back to the reactor through a recycle gas compressor which recovers reactor gases. The product is transferred to a purger vessel to remove entrained hydrocarbons.

### EXAMPLE 22

### Catalyst Preparation

Davison Grade 948 silica was hydrated and used as the support. Twentythree liters of a 15 weight percent TMA solution in hexane was charged into a ten gallon reactor equipped with an internal agitator. While agitating the TMA solution 4201 g of the hydrated silica was added at a slow rate of addition. The silica had a measured LOI (loss-on-ignition) of 11.7 weight percent. At the completion of the silica addition, 95 grams of bis(1-methyl-3-n-butyl cyclopentadienyl) zirconium dichloride was added and allowed to react while stirring at 42°C. The catalyst was then dried at approximately 60°C under pressure and a nitrogen purge. A total of 4475 grams of catalyst was recovered. The catalyst was then reslurried in hexane. A solution of 118 grams of Kemamine AS-990 surface modifier in 500cc of hexane was added and mixed for 30 minutes with the catalyst. The catalyst system was then dried as above.

### Polymerization

The catalyst prepared in the above example was used in a continuous gas phase, fluid-bed reactor. The run conditions were as follows:

| **Run Conditions** | |
|---|---|
| Temperature (°C) | 79 |
| Pressure (bar) | 21.7 |
| Ethylene (mole %) | 50 |
| Hydrogen (ppm) | 170 |
| Hexene (mole%) | 1.2 |
| TEAL Concentration (ppm) | 79 |
| Bed Weight (Kg) | 113 |
| Production Rate (Kg/Hr) | 28 |
| Catalyst Productivity (Kg/Kg) | 3050 |
| Bulk Density (g/cc) | 0.42 |
| Average Particle Size (microns) | 737 |
| Fines (% less than 120 microns) | 0.0 |

The reaction initiated smoothly with no indication of reactor instability. The reactor was operated at these conditions for about four days.

### COMPARATIVE EXAMPLE 23

### Catalyst Preparation

The same catalyst as prepared in Example 22 was used, however, the catalyst was not treated with the surface modifier.

### Polymerization

While the catalyst and polymerization of Example 22 was in progress the catalyst of this example without the surface modifier was introduced after 4 days of stable operation with the catalyst having the surface modifier. Within one hour the catalyst feeder began to plug. Within three hours chips and sheets were observed in the discharged product. The amount of the chips and sheets increased from 109 g/hr to 623 g/hr after four hours more. At this point, the reactor discharge system plugged and a reactor shut down was required. When the reactor was opened and inspected, a large chunk of fused polymer was observed on the top of the distributor plate together with numerous smaller chips and sheets of polymer. Extensive reactor cleaning was needed. Run conditions at the time of the shutdown were as follows:

| **Run Conditions** | |
|---|---|
| Temperature (°C) | 79 |
| Pressure (bar) | 21.7 |
| Ethylene (mole %) | 50 |
| Hydrogen (ppm) | 180 |
| Hexene (mole%) | 1.2 |
| TEAL Concentration (ppm) | 92 |
| Bed Weight (Kg) | 116 |
| Production Rate (Kg/Hr) | 26 |
| Catalvst Productivity (Kg/Kg) | 2670 |
| Bulk Density (g/cc) | 0.46 |
| Average Particle Size (microns) | 688 |
| Fines (% less than 120 microns) | 0.15 |

This example illustrates that unstable operations can be avoided by operating with a catalyst of the invention containing a surface modifier. The catalyst productivity was also lower and the percentage of fines in the polymer product increased. Within six hours of the introduction of the catalyst without the surface modifier the reactor had to be shut down.

The catalyst of the invention can be used in a single reactor or in a series reactor or even in series where one reactor is a slurry reactor and the other being a gas phase reactor. It is contemplated that the catalyst of the invention can be mixed with a traditional Ziegler-Natta catalyst or a catalyst of the invention can be separately introduced with a traditional Ziegler-Natta catalust or any other metallocene catalyst system with or without a surface modifier.

## Claims

1. A method for forming a supported metallocene catalyst system, the method comprising combining in a suitable solvent a porous inorganic oxide support material, a metallocene catalyst component, an activator and a surface modifier wherein the surface modifier is represented by the formula: 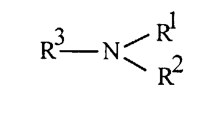 wherein R³ is hydrogen or a branched or linear alkyl group having 1 to 50 carbon atoms, R¹ and R² may be the same or different and may be the same as R³ or contain another heteroatom selected from the group consisting of O, N, P or S, or a sorbitol mono-oleate compound, but excluding the combination of bis(1,3-methyl-n-butyl cyclopentadienyl) zirconium dichloride, methyl alumoxane and C₁₈H₃₇N(CH₂CH₂OH)₂.

2. The method of claim 1 wherein the surface modifier is present in an amount in the range of 0.1 weight percent to less than 5 weight percent of the total weight of the supported catalyst system.

3. The method of claims 1 or 2 wherein the surface modifier is represented by the formula: 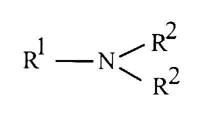 wherein R¹ is a hydrogen or a linear or branched alkyl group of from 1 to 50 carbon atoms; R² is a hydroxy group of a (CH₂)ₓ radical and where x is an integer from 1 to 50.

4. The method of any of the preceding claims wherein the surface modifier is selected from at least one of the group of compounds represented by the following chemical formula: C₁₈H₃₇N(CH₂CH₂OH)₂, C₁₂H₂₅N(CH₂CH₂OH)₂ and (CH₃)(CH₂)₇(CH)₂(CH₂)₇OCOCH₂(CHOH)₄CH₂OH.

5. A method for producing a supported metallocene catalyst system, the method comprising the steps of:
(a) contacting a porous inorganic oxide support material with at least one metallocene catalyst component and at least one activator; and then
(b) adding at least one surface modifier, wherein the surface modifier is present in an amount of 0.05 to 10 weight percent based on the total weight of the catalyst system wherein the surface modifier is represented by the formula: 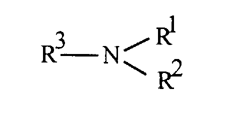 wherein R³ is hydrogen or a branched or linear alkyl group having 1 to 50 carbon atoms and R¹ and R² may be the same or different and may be the same as R³ or contain another heteroatom selected from the group consisting of O, N, P or S, or a sorbitol mono-oleate compound, but excluding the combination of bis(1,3-methyl-n-butyl cyclopentadienyl) zirconium dichloride, methyl alumoxane and the surface modifier C₁₈H₃₇N(CH₂CH₂OH).

6. The method of claim 5 wherein the surface modifier is selected from at least one of the group of compounds represented by the following chemical formula: C₁₈H₃₇N(CH₂CH₂OH)₂, C₁₂H₂₅N(CH₂CH₂OH)₂ and (CH₃)(CH₂)₇(CH)₂(CH₂)₇OCOCH₂(CHOH)₄CH₂OH.

7. The method of claims 5 or 6 wherein the surface modifier is present in an amount in the range of 0.1 weight percent to less than 5 weight percent of the total weight of the supported catalyst system

8. A process for polymerizing olefins alone or in combination with one or more other olefins, said process comprising polymerizing in the presence of the supported catalyst system prepared by the methods of any of the preceding claims.

9. The catalyst system produced by the method of any of the preceding claims.

## Patentansprüche

1. Verfahren zur Bildung eines trägergestützten Metallocenkatalysatorsystems, bei dem in einem geeigneten Lösungsmittel poröses anorganisches Oxidträgermaterial, Metallocenkatalysatorkomponente, Aktivator und Oberflächenmodifizierungsmittel kombiniert werden, wobei das Oberflächenmodifizierungsmittel durch die Formel 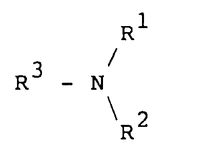 wiedergegeben wird, in der R³ Wasserstoff oder eine verzweigte oder lineare Alkylgruppe mit 1 bis 50 Kohlenstoffatomen ist, R¹ und R² gleich oder unterschiedlich sein können und gleich R³ sein können oder ein anderes Heteroatom ausgewählt aus der Gruppe bestehend aus O, N, P oder S enthalten können, oder eine Sorbitolmonooleatverbindung ist, wobei jedoch die Kombination aus Bis(1,3-methyl-n-butylcyclopentadienyl)zirconiumdichlorid, Methylalumoxan und C₁₈H₃₇N(CH₂CH₂OH)₂ ausgeschlossen ist.

2. Verfahren nach Anspruch 1, bei dem das Oberflächenmodifizierungsmittel in einer Menge im Bereich von 0,1 Gew.% bis weniger als 5 Gew.% des Gesamtgewichts des trägergestützten Katalysatorsystems vorhanden ist.

3. Verfahren nach Anspruch 1 oder 2, bei dem das Oberflächenmodifizierungsmittel durch die Formel 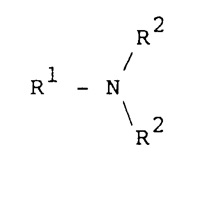 wiedergegeben wird, in der R¹ Wasserstoff oder eine lineare oder verzweigte Alkylgruppe mit 1 bis 50 Kohlenstoffatomen ist, R² eine Hydroxygruppe eines (CH₂)ₓ-Rests ist und x eine Zahl von 1 bis 50 ist.

4. Verfahren nach einem der vorhergehenden Ansprüche, bei dem das Oberflächenmodifizierungsmittel ausgewählt ist aus mindestens einer aus der Gruppe der Verbindungen, die durch die folgende chemische Formel wiedergegeben werden: C₁₈H₃₇N(CH₂CH₂OH)₂, C₁₂H₂₅N(CH₂CH₂OH)₂ und (CH₃)(CH₂)₇(CH)₂(CH₂)₇OCOCH₂(CHOH)₄CH₂OH.

5. Verfahren zur Herstellung eines trägergestützten Metallocenkatalysatorsystems, bei dem in Stufen
(a) poröses anorganisches Oxidträgermaterial mit mindestens einer Metallocenkatalysatorkomponente und mindestens einem Aktivator kontaktiert wird, und dann
(b) mindestens ein Oberflächenmodifizierungsmittel zugegeben wird, wobei das Oberflächenmodifizierungsmittel in einer Menge von 0,05 bis 10 Gew.% vorhanden ist, bezogen auf das Gesamtgewicht des Katalysatorsystems, wobei das Oberflächenmodifizierungsmittel durch die Formel 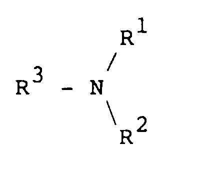 wiedergegeben wird, in der R³ Wasserstoff oder eine verzweigte oder lineare Alkylgruppe mit 1 bis 50 Kohlenstoffatomen ist und R¹ und R² gleich oder unterschiedlich sein können und gleich R³ sein können oder ein anderes Heteroatom ausgewählt aus der Gruppe bestehend aus O, N, P oder S enthalten können, oder eine Sorbitolmonooleatverbindung ist,
wobei jedoch die Kombination aus Bis(l,3-methyl-n-butylcyclopentadienyl)zirconiumdichlorid, Methylalumoxan und dem Oberflächenmodifizierungsmittel C₁₈H₃₇N(CH₂CH₂OH)₂ ausgeschlossen ist.

6. Verfahren nach Anspruch 5, bei dem das Oberflächenmodifizierungsmittel ausgewählt ist aus mindestens einer aus der Gruppe von Verbindungen, die durch die folgende chemische Formel wiedergegeben werden: C₁₈H₃₇N(CH₂CH₂OH)₂, C₁₂H₂₅N(CH₂CH₂OH)₂ und (CH₃)(CH₂)₇(CH)₂(CH₂)₇OCOCH₂(CHOH)₄CH₂OH.

7. Verfahren nach einem der Ansprüche 5 oder 6, bei dem das Oberflächenmodifizierungsmittel in einer Menge im Bereich von 0,1 Gew.% bis weniger als 5 Gew.% des Gesamtgewichts des trägergestützten Katalysatorsystems vorhanden ist.

8. Verfahren zum Polymerisieren von Olefinen allein oder in Kombination mit einem oder mehreren anderen Olefinen, wobei das Verfahren das Polymerisieren in Gegenwart des trägergestützten Katalysatorsystems umfaßt, das nach den Verfahren gemäß einem der vorhergehenden Ansprüche hergestellt ist.

9. Katalysatorsystem, das nach dem Verfahren gemäß einem der vorhergehenden Ansprüche hergestellt ist.

## Revendications

1. Procédé pour préparer une formulation de catalyseur à base d'un métallocène sur un support, procédé qui comprend l'association dans un solvant convenable d'une matière de support consistant en un oxyde inorganique poreux, d'un constituant de catalyseur du type métallocène, d'un activateur et d'un modificateur de surface, ledit modificateur de surface étant représenté par la formule : 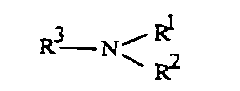 dans laquelle R³ représente l'hydrogène ou un groupe alkyle ramifié ou linéaire ayant 1 à 50 atomes de carbone, R¹ et R² peuvent être identiques ou différents et peuvent être identiques à R³ ou contenir un autre hétéroatome choisi dans le groupe consistant en O, N, P et S, ou un monooléate de sorbitol, mais à l'exclusion de l'association de dichlorure de bis(1,3-méthyl-n-butylcyclopentadiényl)zirconium, de méthylalumoxane et de C₁₈H₃₇N(CH₂CH₂OH)₂.

2. Procédé suivant la revendication 1, dans lequel le modificateur de surface est présent en une quantité comprise dans l'intervalle de 0,1 pour cent en poids à moins de 5 pour cent en poids du poids total de la formulation de catalyseur sur un support.

3. Procédé suivant la revendication 1 ou 2, dans lequel le modificateur de surface est représenté par la formule : 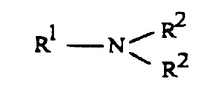 dans laquelle R¹ représente l'hydrogène ou un groupe alkyle linéaire ou ramifié ayant 1 à 50 atomes de carbone ; R² représente un groupe hydroxy ou un radical (CH₂)ₓ dans lequel x représente un nombre entier de 1 à 50.

4. Procédé suivant l'une quelconque des revendications précédentes, dans lequel le modificateur de surface consiste en au moins un des composés du groupe de composés représentés par les formules chimiques suivantes :
C₁₈H₃₇N(CH₂CH₂OH)₂, C₁₂H₂₅N(CH₂CH₂OH)₂ et
(CH₃)(CH₂)₇(CH)₂(CH₂)₇OCOCH₂(CHOH)₄CH₂OH.

5. Procédé pour la production d'une formulation de catalyseur à base de métallocène sur un support, procédé qui comprend les étapes consistant :
(a) à mettre en contact une matière de support consistant en un oxyde inorganique poreux avec au moins un constituant de catalyseur du type métallocène et au moins un activateur ; puis
(b) à ajouter au moins un modificateur de surface, ledit modificateur de surface étant présent en une quantité de 0,05 à 10 pour cent en poids sur la base du poids total de la formulation de catalyseur, ledit modificateur de surface étant représenté par la formule : 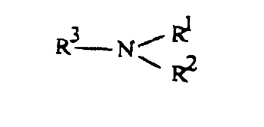 dans laquelle R³ représente l'hydrogène ou un groupe alkyle ramifié ou linéaire ayant 1 à 50 atomes de carbone et R¹ et R² peuvent être identiques ou différents et peuvent être identiques à R³ ou contenir un autre hétéroatome choisi dans le groupe consistant en O, N, P et S, ou un monooléate de sorbitol, mais à l'exclusion de l'association de dichlorure de bis(1,3-méthyl-n-butylcyclopentadiényl)zirconium, de méthylalumoxane et du modificateur de surface de formule C₁₈H₃₇N(CH₂CH₂OH).

6. Procédé suivant la revendication 5, dans lequel le modificateur de surface consiste en au moins un composé du groupe de composés représentés par les formules chimiques suivantes : C₁₈H₃₇N(CH₂CH₂OH)₂, C₁₂H₂₅N(CH₂CH₂OH)₂ et (CH₃) (CH₂)₇(CH)₂(CH₂)₇OCOCH₂(CHOH)₄CH₂OH.

7. Procédé suivant la revendication 5 ou 6, dans lequel le modificateur de surface est présent en une quantité comprise dans l'intervalle de 0,1 pour cent en poids à moins de 5 pour cent en poids du poids total de la formulation de catalyseur sur un support.

8. Mode opératoire pour la polymérisation d'oléfines seules ou en association avec une ou plusieurs autres oléfines, ledit mode opératoire comprenant une polymérisation en présence de la formulation de catalyseur sur un support préparée par les procédés suivant l'une quelconque des revendications précédentes.

9. Formulation de catalyseur produite par le procédé suivant l'une quelconque des revendications précédentes.
